# EUROPÄISCHE PATENTSCHRIFT

(11) **EP 0 670 177 B1**
(45) Veröffentlichungstag und Bekanntmachung des Hinweises auf die Patenterteilung: **07.01.1998**
(21) Anmeldenummer: 95102522.0
(22) Anmeldetag: 22.02.1995
(51) Int. Cl.: B01D 63/06, B01D 65/08

(54) **Verfahren zum Filtern von Flüssigkeiten sowie eine dazugehörige Vorrichtung**
Process for filtering liquids as well as a device therefore
Procédé de filtrage de liquides ainsi qu'un dispositif pour celà

(30) Priorität: 03.03.1994 DE 4407094
(43) Veröffentlichungstag der Anmeldung: 06.09.1995
(73) Patentinhaber: APPLIKATIONS- UND TECHNIKZENTRUM FÜR ENERGIEVERFAHRENS-, UMWELT-, UND STRÖMUNGSTECHNIK, 92237 Sulzbach-Rosenberg (DE)
(72) Erfinder: Till, Konrad, Dr., D-90518 Altdorf (DE); Hertle, Arnim, Dipl. Ing., D-92245 Köfering (DE); Schulz, Wolfgang, Dipl. Ing., D-91301 Forchheim (DE); Hirsch, Bernhard, D-92245 Köfering (DE); Köhler, Steffen, Dipl. Ing., D-91054 Erlangen (DE)
(74) Vertreter: Fehners, Klaus Friedrich, Dipl.-Ing., Dipl.-Wirtsch.-Ing.

(56) Entgegenhaltungen:
- EP-A- 0 235 933
- EP-A- 0 499 509
- DE-A- 3 411 471
- JOURNAL OF MEMBRANE SCIENCE, Bd.83, Nr.2, 26. August 1993, AMSTERDAM,NL Seiten 167 - 172 N.D.NIKOLOV ET AL. 'ultrafiltration in a tubular membrane under simultaneous action of pulsating pressures in permeate and feed solution'
- JOURNAL OF MEMBRANE SCIENCE, Bd.84, Nr.3, 14. Oktober 1993, AMSTERDAM,NL Seite 279-292 C.D.BERTRAM ET AL 'flux enhancement in crossflow microfiltration using a collapsible-tube pulsation generator'
- JOURNAL OF MEMBRANE SCIENCE, Bd.70, Nr.2/3, 17. Juni 1992, AMSTERDAM,NL Seite 257-266 B.B.GUPTA ET AL 'permeate flux enhancement by pressure and flow pulsations in microfiltration with mineral membranes'
- PATENT ABSTRACTS OF JAPAN vol. 13, no. 336 (C-623) (3684) 27. Juli 1989 & JP-A-01 115 500 (SHOWA ENG KK) 8. Mai 1989

## Beschreibung

Die Erfindung betrifft ein Verfahren zum Filtern von Flüssigkeiten, bei dem einer in einer Hülle befindlichen schlauchförmigen Membran eine Flüssigkeit zugeführt wird und ein daraus ausgefiltertes Permeat zwischen Hülle und Außenwand der schlauchförmigen Membran entnommen wird. Außerdem wird eine Vorrichtung zur Durchführung des Verfahrens gelehrt, die mit einer in einer Hülle befindlichen schlauchförmigen Membran, die über einen Zulauf mit Flüssigkeit speisbar ist, die ferner mit einem Permeatablauf über den ein durch die Membran gefilterter Teil der Flüssigkeit als Permeat entnehmbar ist und mit einem weiteren Ablauf für den ungefilterten Teil der Flüssigkeit versehen ist.

Die ständig wachsenden Anforderungen an die Reinigungsleistung von Kläranlagen können nur durch verstärkte meß-, steuer- und regeltechnische Maßnahmen bewältigt werden. Das setzt eine meist kontinuierliche Erfassung physikalischer und chemischer Meßwerte, wie beispielsweise den Ammonium-, Nitrat- oder Phosphorgehalt, voraus. Nur in Kenntnis der Konzentrationen mittels genauer Messung kann eine Regelung für eine Prozeßleittechnik und in Verbindung damit eine Steuerung für moderne Reinigungsverfahren durchgeführt werden.

Um bei einer Onlineanalyse einen störungsfreien Betrieb der Analysegeräte zu gewährleisten, muß der Probenstrom kontinuierlich gefiltert werden, da sowohl optische als auch potentialchemische Detektoren einen feststoffreien Probenstrom mit Partikeldurchmessern kleiner als 1 µm erfordern. Die dafür benötigten Filteranlagen sind teuer und verursachen aufgrund der benötigten hohen zuzuführenden Flüssigkeitsströme hohe Betriebskosten.

Ein weiteres Problem stellen die bei solchen Filtrationsanlagen benötigten kurzen Reinigungsintervalle für die Filter denn das Filtern von Suspensionen mit derartigen kleinen Partikeln geschieht üblicherweise über Membranen, die sich sehr schnell zusetzen können.

Zur Verlängerung der Membranstandzeiten sind verschiedene Verfahren zur Reinigung bekannt, wie z.B. die periodische Rückspülung mit Filtrat oder Druckluft, die periodische chemische Reinigung und die mechanische Reinigung durch sich innerhalb der Membran bewegende Einbauten.

Die DE 41 05 210 C1 beschreibt ein Querstrommikrofilter mit Poren, deren trichterförmige Ausbildung eine Rückspülung erleichtern soll. Die DE 41 31 604 A1 und die EP 0 499 509 A1 beschreiben Querstrommikrofilter, bei denen, um das Zusetzen der Membran zu verhindern und die Reinigungsintervalle zu verlängern, bewegliche Einbauten, wie z. B. rotierende Scheiben oder Schrauben, innerhalb der schlauchförmigen Membran vorgesehen sind. Diese Einbauten sind teuer, aufwendig und bedürfen der Wartung, so daß derartige Filter für die bei der Onlineanalyse auftretenden Probleme keine befriedigende Lösung darstellen.

Zur Verlängerung der Reinigungsintervalle für die Membran werden auf der Zulaufseite auch sehr hohe Strömungsgeschwindigkeiten durch Zuläufe bis zu 12 m³/h erzeugt, damit die Ausbildung einer Deckschicht verhindert wird. Das bedeutet auch sehr lange schlauchförmige Membranen zur Sicherstellung genügender Mengen von Permeat, so daß bewegliche Einbauten dabei nicht mehr vertretbar sind.

Trotz des hohen Zulaufs sind die Reinigungsintervalle so kurz, daß zwei Module parallel betrieben werden müssen, um immer ein gereinigtes Modul zur Verfügung zu haben. Für einen erfolgreichen kontinuierlichen Betrieb solcher Anlagen ist zusätzlich auch eine Umschaltautomatik zwischen beiden Modulen notwendig.

Alle angegebenen Verfahren führen zu einer platzintensiven Bauweise von Filtrationsanlagen, die aufgrund des hohen Zulaufs auch einen hohen Energiebedarf haben. Eine Vorfiltration zur Verringerung der Deckschicht ändert die Situation nicht wesentlich.

Aufgabe der Erfindung ist es, ein Verfahren sowie eine entsprechende Vorrichtung zu schaffen, mit denen eine Filtration mit geringem Aufwand bei langen Reinigungsintervallen erzielt wird.

Ausgehend vom eingangs erwähnten Verfahren mit einer schlauchförmigen Membran in einer Hülle wird die Aufgabe erfindungsgemäß dadurch gelöst, daß die Hülle elastisch und/oder beweglich ausgeführt wird und über Membran und Hülle, zumindest in Teilbereichen, eine Relativbewegung zwischen Hülle und der darin befindlichen Membran, insbesondere durch Schwingungsanregung, erzeugt wird.

Versuche mit einem festen Rohr als Hülle haben in einem Versuchsaufbau, bei dem Schwingungen über einen pulsierenden Druck in der zulaufenden Flüssigkeit erzeugt wurden, gezeigt, daß sich Reinigungsintervalle von drei bis vier Wochen erzielen ließen. Unerwarteterweise zeigte sich jedoch bei Auswechseln des Rohres gegen einen elastischen, beweglichen Schlauch als Hülle, daß bei sonst gleichen Bedingungen die Anlage länger als 3 Monate betrieben werden konnte, ohne daß der Permeatfluß unter die für eine Analyse zur Überwachung einer Kläranlage nötige Menge absank.

Das ist von vornherein nicht verständlich, da die Innenwand der Hülle zusammen mit der Außenwand der Membran eigentlich nur zur Führung des Permeatflusses dient, weshalb eine derartige dramatische Wirkungserhöhung durch das Auswechseln des Rohres gegen einen Schlauch nicht erwartet wurde. Zur Erklärung dieses Phänomens wird angenommen, daß aufgrund der Elastizität der Hülle auch diese zur Schwingung angeregt wird, deren Schwingungen einerseits auf die Membran rückwirken, und andererseits durch unterschiedliche Schwingungsmoden der Hülle und der Membran, eine periodische Strömung radial zur schlauchförmigen Membran angeregt wird, welche die Ausbildung einer Deckschicht verhindert. Wie später deutlicher wird, scheint dabei die Relativbewegung von Hülle und Membran die wesentliche Rolle zu spielen. Deswegen würde auch eine Bewegung der Hülle von außen, relativ zur Membran für einen verringerten Aufbau einer Deckschicht ausreichen, wenn die Hülle entsprechend beweglich ist.

Die Relativbewegung der Hülle zur Membran und umgekehrt, ermöglicht die Erzeugung von Turbulenzen in den Flüssigkeitsströmen durch Bewegungsübertragung von außerhalb der Hülle, so daß Einbauten innerhalb der schlauchförmigen Membran, wie aus dem dargestellten Stand der Technik bekannt, nicht mehr vorgesehen werden müssen. Das erfindungsgemäße Verfahren ist aber auch noch aus anderen Gründen den bekannten Verfahren überlegen. Die Einbauten nach dem Stand der Technik mit rotierenden Schraubenwellen oder Scheiben können nur eine gleichmäßige Strömung in Umfangsrichtung erzeugen, so daß auf die Membran auch Zentrifugalkräfte wirken, welche die Partikel an der Membranoberfläche verdichten. Dagegen wird durch die Relativbewegung beim erfindungsgemäßen Verfahren eine im wesentlichen radiale Ablösung erzielt, wobei keine Strömungen in Umfangsrichtung nötig sind.

Aus dem Versuchsergebnis folgt also, daß Schwingungen auf die Membran von außen oder innen über die Hülle aufgebracht werden können, um sehr lange Reinigungsintervalle zu erzielen, wobei die Beweglichkeit und Schwingungsfähigkeit von Membran und Hülle die bestimmenden Faktoren sind.

Schwingungen und andere Relativbewegungen zwischen Hülle und Membran lassen sich in unterschiedlicher Weise bewirken. Ein geringer Aufwand wird aber gemäß einer bevorzugten Weiterbildung dadurch erzielt, daß die Relativbewegung zwischen Hülle und Membran über periodische Druckänderungen der zugeführten Flüssigkeit erzeugt wird. Flüssigkeiten sind einerseits wegen ihres guten mechanischen Kontaktes ein ideales Medium zur Übertragung von Schwingungen, andererseits ist durch ihre Flexibilität eine Entkopplung von Eigenschwingungen der Hülle und der Membran von der Schwingungsanregung über Druckänderung zu erwarten.

Durch die Verwendung des Druckes anstelle direkt angreifender Kräfte zur Erzeugung einer Relativbewegung bzw. Schwingungsanregung werden vorteilhafterweise die an einer Wand der Hülle, dem Druck entgegenwirkenden Kräfte längs der Hülle in radialer Richtung wirksam, die nach der oben gegebenen Erklärung besonders dazu geeignet sind, eine Deckschicht zu verhindern.

Außerdem breitet sich eine Druckänderung in einer Flüssigkeit mit Schallgeschwindigkeit aus, so daß längs der Hülle alle Flächenelemente annähernd gleichzeitig angeregt werden, wodurch entlang der gesamten Hülle gleich gute Bedingungen zur Auflösung der Deckschicht vorliegen.

Zur Erzeugung derartiger Druckänderungen sind verschiedene Möglichkeiten denkbar, beispielsweise könnte ein die Druckschwankungen erzeugender Kompressor verwendet werden.

Eine besonders einfache Möglichkeit besteht gemäß einer bevorzugten Weiterbildung jedoch darin, daß die Flüssigkeit pulsierend gefördert wird und an einem am strömungsmäßigen Ende der schlauchförmigen Membran befindlichen Überdruckventil ein Druckanstieg erzielt wird, wodurch sich die Wand der schlauchförmigen Membran über die gesamte Länge dehnt, und danach das Überdruckventil geöffnet wird, um einen Druckabfall zu erzeugen, der eine Druckwelle durch die Membran hervorruft, welche Schwingungen in der Membran verursacht, die einer Anlagerung von Feststoffen auf der Membran entgegenwirken.

Für die pulsierende Förderung kann beispielsweise dieselbe Pumpe verwendet werden, mit der die zu filternde Flüssigkeit, der sogenannte Feed, der schlauchförmigen Membran zugeführt wird. Druckanstieg und Druckabfall werden mit einem Überdruckventil erzielt. Diese Weiterbildung ermöglicht die Durchführung des Verfahrens mit einem minimalem Aufwand.

Außerdem wird bei der Weiterbildung des Verfahrens auch eine Längenausdehnung von Hülle und Membran zu erwarten sein, wodurch die Membran beim Abfall des Druckes selbst zurückschnellt, also auch eine besonders effektive Schwingungsanregung der Membran selbst erfolgt.

Zur Durchführung des beschriebenen Verfahrens ist eine Vorrichtung mit einer elastisch und/oder beweglich ausgebildeten Hülle und eine an der Hülle wirkenden Einrichtung zur Erzeugung und Übertragung von zumindest lokal begrenzten Relativbewegungen zwischen Hülle und Membran gekennzeichnet.

Eine derartige Vorrichtung zeichnet sich vor allem durch ihren einfachen Aufbau aus. Statt eine schlauchförmige Membran mit einem starten Rohr zu umgeben, reicht eine elastische und bewegliche Hülle, beispielsweise in Form eines Schlauches aus, die kostengünstig ist. Die zusätzliche Einrichtung zur Übertragung von Schwingungen bedeutet keinen Mehraufwand, da nämlich mit der erfindungsgemäßen Vorrichtung aufgrund der mit dieser erzielbaren langen Reinigungsintervalle beispielsweise ein zweiter Filter und eine Umschaltvorrtichtung mit Steuerung für einen kontinuierlichen Betrieb eingespart werden können.

Die Vorrichtung ist besonders einfach aufgebaut, wenn die Einrichtung gemäß einer bevorzugten Weiterbildung so ausgelegt ist, daß sie einen pulsierenden Druck auf die zugeführte Flüssigkeit überträgt, der die Hülle und/oder die Membran in Relativbewegungen, insbesondere Schwingungen, versetzt.

Dann kann die Einrichtung einfach ein periodisch arbeitender Kompressor oder eine Pumpe sein, welche als handelsübliche Komponenten serienmäßig gefertigt werden und dementsprechend kostengünstig erhältlich sind.

Außerdem hat diese Weiterbildung den Vorteil einer effektiven Schwingungsübertragung über die zu filternde Flüssigkeit, wie vorhergehend bei einer Weiterbildung des Verfahrens schon beschrieben wurde.

Bei einer weiterführenden vorzugsweisen Weiterbildung der Erfindung ist am Ablauf für den ungefilterten Teil der Flüssigkeit ein Überdruckventil mit einem Schaltdruck vorgesehen, bei dem das Überdruckventil sich öffnet, und an dem bei Zuführung der zu filternden Flüssigkeit in die schlauchförmige Membran ein Druckanstieg erzeugbar ist, der bis zum Schaltdruck anwächst, bei dessen Erreichen das Überdruckventil durch Ablassen der zu filternden Flüssigkeit aus der Membran den Druck in der schlauchförmigen Membran vermindert.

Damit kann das weiter oben beschriebene Verfahren durchgeführt werden, bei dem der zusätzliche Vorteil einer Dehnung von Hülle und Membran in Längsrichtung entsteht. Außerdem ist neben der elastischen Ausführung der Hülle gegenüber bekannten Vorrichtungen nur ein Überdruckventil notwendig, wenn die fördernde Pumpe zur Erzeugung eines Druckanstiegs benutzt wird. Diese Weiterbildung bedeutet also eine weitere Vereinfachung im Aufbau einer erfindungsgemäßen Vorrichtung.

Für spezielle Pumpen oder Kompressoren zur Erzeugung eines Druckanstiegs kann gemäß einer vorzugsweisen Weiterbildung verzichtet werden, wenn die Einrichtung zur Übertragung eines pulsierenden Drucks eine Membranpumpe ist. Dann kann die Erzeugung von Druckstößen und die Förderung des Feeds über ein und dieselbe Pumpe ohne zusätzliche Steuerung durchgeführt werden. Das bedeutet eine wesentliche Vereinfachung, die sich in niedrigen Kosten und geringem Wartungsaufwand vorteilhaft äußert.

Eine Membranpumpe hat außerdem den Vorteil, daß sie periodische Druckänderung aufgrund ihrer Bauweise mit hoher Frequenz durchführen kann. Bei anderen Anwendungen werden die Druckänderungen einer Membranpumpe häufig als nachteilig empfunden, da üblicherweise eine konstante Förderung erwünscht ist. Im vorliegenden Fall ermöglicht diese Eigenschalt jedoch besonders vorteilhaft einen kostengünstigen und einfachen Aufbau einer erfindungsgemäßen Vorrichtung.

Um die Reinigung der Membran effektiv durchführen zu können, sollten die Schwingungen sehr häufig auf die Membran aufgebracht werden, damit die Deckschicht auf der Membran nicht zu dick wird, bevor sie durch erfindungsgemäß erzeugte Schwingungen und/oder Bewegungen wieder abgetragen wird. Gemäß einer vorzugsweisen Weiterbildung sind mit der Einrichtung periodische Druckschwankungen mit einer Frequenz von mehr als 100 pro Minute erzeugbar. Mit dieser Frequenz wurden bei einem später beschriebenen Ausführungsbeispiel sehr lange Reinigungsintervalle erzielt.

Für eine kostengünstige Ausführung der Vorrichtung sollten möglichst einfache Materialien verwendet werden. Eine bevorzugte Weiterbildung sieht deswegen vor, daß die Hülle ein PVC-Gewebeschlauch ist. PVC- Gewebeschläuche sind heute für die verschiedensten Anwendungen und Anforderungen kostengünstig erhältlich. Ein PVC-Gewebeschlauch als Hülle ist also eine besonders einfache Alternative zu speziell bezüglich Schwingungsverhalten, Elastizität und Beweglichkeit für das Verfahren optimierter Hüllen. Versuche haben gezeigt, daß mit einem PVC-Gewebeschlauch schon hervorragende Ergebnisse erzielbar sind, die eine spezielle Anpassung des Hüllenmaterials zur Optimierung einer erfindungsgemäßen Vorrichtung unnötig machte.

Bei unterschiedlichen Filteranforderungen muß die Vorrichtung für den benötigten Permeatfluß speziell ausgelegt werden. Insbesondere für die Verwendung bei der Onlineanalyse hat sich jedoch eine vorzugsweisen Weiterbildung als geeignet erwiesen, bei der die schlauchförmige Membran einen Außendurchmesser von 8,6 mm hat und die Hülle ein PVC- Gewebeschlauch mit einem Innendurchmesser von 10 mm ist, der einem Überdruck von 10 bar standhält.

Die Werte für den Außendurchmesser der Membran und den Innendurchmesser des PVC-Gewebeschlauches begrenzen die entnehmbare Permeatflußmenge. Diese Maße bedingen das Volumen des Außenraumes und diese wiederum die Verweilzeit des Permeats in der Filtervorrichtung. Diese Verweilzeit sollte möglichst klein sein, damit möglichst unveränderte Meßwerte mit der Onlineanalyse gewonnen werden können.

Durch die angegebenen Werte wird für die Onlineanalyse eine geeignet große Menge bei selbst geringem Feed bereit gestellt. Außerdem ist der Abstand zwischen Hülle und der Membran für eine gute Übertragung der Schwingungen klein genug.

Für die Relativbewegungen der Hülle zur Membran, die sich direkt auf das Abtragverhalten für eine Deckschicht auswirken, sind Elastizität und Beweglichkeit der Hülle geeignet auszuwählen. Die angegebenen Merkmale der Weiterbildung bezüglich Material und Durchmesser erlauben dem Fachmann einen direkten Nachbau einer wirkungsvollen erfindungsgemäßen Vorrichtung, gestatten ihm aber auch eine Umrechnung zur Auslegung anderer Hüllenmaterialien auf ähnlich große Schwingungen, wie sie bei einem PVC-Schlauch auftreten können,, um den gefundenen Effekt auch für andere Materialen und Anforderungen einsetzen zu können.

Um auch longitudinale Schwingungsmoden in radialer Richtung nutzen zu können, sieht eine vorteilhafte Weiterbildung vor, daß die Hülle mit der in dieser aufgenommenen schlauchförmigen Membran biegsam ist und spiralförmig mit mehreren Windungen aufgewickelt ist.

Bei dieser Weiterbildung wird die Hülle auch aufgrund einer Druckerhöhung vor allem in radialer Richtung gedehnt, so daß die radiale Komponente der Schwingung verstärkt wird. Die Deckschicht wird also noch effektiver verhindert.

Außerdem ergibt sich durch diese Weiterbildung in vorteilhafter Weise ein kleinerer Platzbedarf. Vor allem, wenn die benötigte Länge der schlauchförmigen Membran für eine noch größere Filtereffektivität verlängert werden soll, bildet dies einen großen Vorteil, da bei der Weiterbildung eine längere Hülle mit Membran ohne wesentliche Vergrößerung des Volumens der Vorrichtung untergebracht werden kann.

Die Vorteile und Merkmale der Erfindung ergeben sich auch aus der nachfolgenden Beschreibung eines Ausführungsbeispiels in Verbindung mit den Zeichnungen. Es zeigen:
- Fig. 1: ein Schnitt durch einen Abschnitt des erfindungsgemäßen Filters,
- Fig. 2: eine schematische Darstellung des erfindungsgemäßen Verfahrens im Vergleich mit einem statischen Filtrationsverfahren,
- Fig. 3: den Aufbau eines Filtrationsmoduls mit dem Filter nach Fig.1
- Fig. 4: eine Filtervorrichtung unter Verwendung des Filtrationsmoduls nach Fig. 3,
- Fig. 5: eine graphische Darstellung der Abhängigkeit des Permeatflusses von der Druckdifferenz an der Membran bei einem dem Ausführungsbeispiel nach Fig. 3 und 4 ähnlichen Aufbau und bei Probenentnahme aus einem Belebungsbecken einer Kläranlage,
- Fig.6: eine graphische Darstellung bzgl. der Abhängigkeit wie bei Fig. 5 jedoch bei Probenentnahme aus der Nachklärung und
- Fig.7: eine graphische Darstellung bzgl. der Abhängigkeit des Permeatflusses von der Betriebsdauer des Ausführungsbeispiels nach Fig. 3 und 4 mit der Größe des Feed als Parameter.

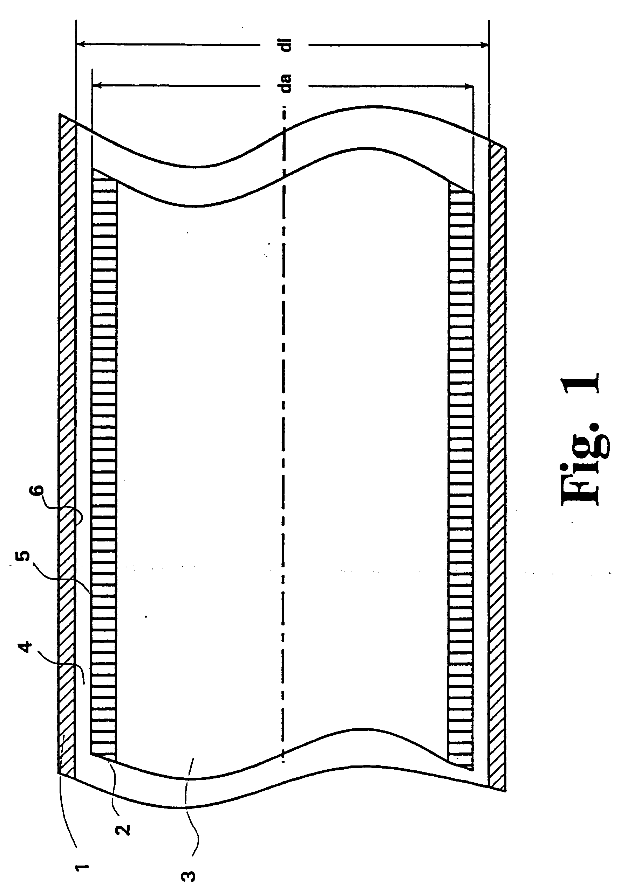

Fig.1 zeigt einen Schnitt durch einen nach den dargestellten Prinzipien der Erfindung aufgebauten Filter. In einer elastischen Hülle 1 befindet sich eine schlauchförmige Membran 2. Die Hülle 1 ist im Ausführungsbeispiel ein PVC-Gewebeschlauch. Sowohl die Hülle 1 als auch die schlauchförmige Membran 2 haben eine Länge von 2,6 m. An den Enden sind die Hülle 1 und die Membran 2 miteinander dicht gegen ein Auslaufen von Flüssigkeit verbunden. Dadurch gibt es zwei getrennte Kammern, nämlich eine von der Membran 2 eingeschlossenen Innerkammer 3 und eine zwischen der Außenwand 5 der schlauchförmigen Membran 2 und der Innenwand 6 der Hülle 1 ausgebildeten Außenkammer 4.

Die Membran 2 ist ein Polypropylenschlauch ohne Stützgewebe mit nominal 0,2 µm Porengröße und maximaler Porengröße von 0,65 µm, einem Innendurchmesser von 5,5 mm. Der Berstdruck ist 8 bar und der Implosionsdruck 2,5 bar. Derartige Membranen können von der Firma Akzo unter der Warenbezeichnung ACCUREL® PP TUBULAR MEMBRANE bezogen werden.

Die zu filternde Flüssigkeit, die im folgenden mit Feed bezeichnet wird, fließt zum Filtern durch die Innenkammer 3. Durch den auf den Feed aufgebrachten Druck wird die Flüssigkeit durch die Membran 2 gedruckt, welche die Feststoffpartikel zurückhält, so daß sich in der Außenkammer 4 ein von Feststoffpartikeln befreites Filtrat, das sogenannte Permeat, bildet. Das Permeat wird am Ende, an dem auch die zu filternde Flüssigkeit abgenommen wird, durch einen zusätzlichen, an der Außenkammer 4 angeschlossenen Schlauch von 3 mm Durchmesser abgeführt.

Die Menge des entnehmbaren Permeats im Verhältnis zum Feed hängt dabei auch von den Volumina der Innenkammer 3 und der Außenkammer 4 ab. Im Ausführungsbeispiel hat die Membran 2 einen Außendurchmesser von 8,6 mm und die Hülle 1 einen Innendurchmesser von 10,0 mm. Der für das Permeat zur Verfügung stehende Raum in der Außenkammer 4 ist geringer als das dem Feed zur Verfügung stehenden Volumen der Innenkammer 3. Die von dort entnommene Menge an Permeat reicht aber selbst bei 100l/h für den Feed aus, da für eine Onlineanalyse nur 0,5l/h Permeat benötigt werden.

Um die Flüssigkeit durch die Membran zum Filtern hindurchzudrücken, wird auf den Feed ein Druck aufgebracht, weshalb auch die Hülle 1 für einen Überdruck ausgelegt sein muß. Im Ausführungsbeispiel wurde die Hülle 1 für einen maximalen Druck von 10 bar ausgelegt. Dieser Maximaldruck ist völlig ausreichend, da, wie später noch deutlicher wird, im Ausführungsbeispiel für die Onlineanalyse nur Drücke weit unterhalb von 3 bar nötig waren, um geeignete Mengen Permeat zu erhalten.

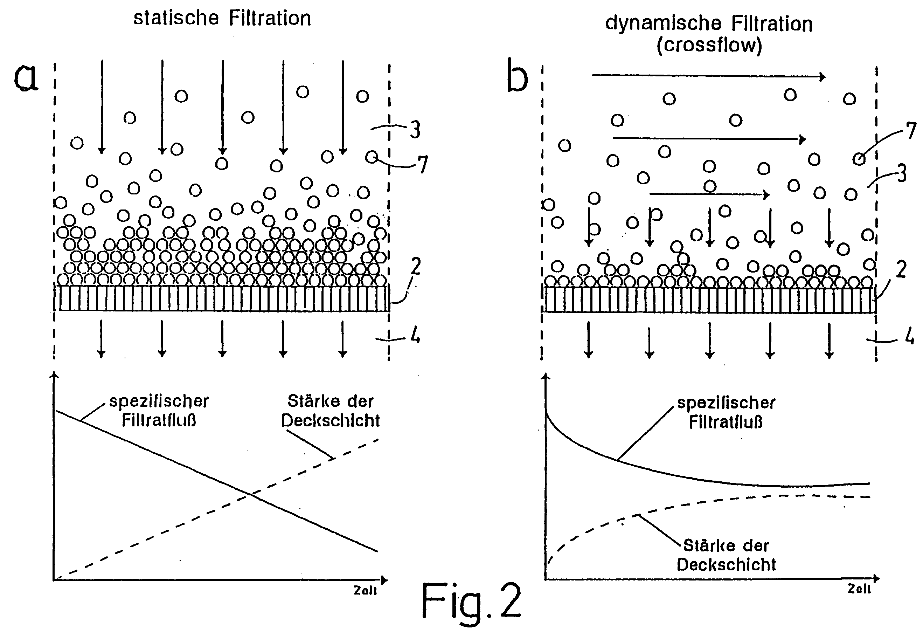

Die Hülle 1 ist dadurch, daß sie als PVC-Gewebeschlauch ausgeführt ist, beweglich und folglich gegen die Membran verschiebbar. Weiter weist sie wegen des Materials eine gewisse Elastizität auf, so daß an ihr verschiedene Schwingungsmoden angeregt werden können. Die Membran 2 ist ebenfalls schwingungsfähig. Bei entsprechender Anregung von Schwingungsmoden entstehen Relativbewegungen zwischen Hülle 1 und Membran 2, so daß lokal und zeitlich begrenzte, radiale Strömungskomponenten in der Nähe der Membran auftreten, die einer Entstehung einer Deckschicht an der Innenwand der Membran 2 entgegenwirken. Daß dazu im wesentlichen radiale Komponenten von Schwingungen oder Bewegungen geeignet sind, wird aus der schematischen Darstellung der Fig. 2 deutlich.

In Fig. 2 wird das beim erfindungsgemäßen Verfahren verwendete Prinzip in Fig. 2b im Vergleich zu einem herkömmlichen statischen Verfahren in Fig. 2a anhand schematischer Zeichnungen des Filtrationsvorgangs dargestellt. Unter den Prinzipbildern befinden sich jeweils Diagramme für den erwarteten zeitlichen Verlauf des Permeatflusses und den Aufbau einer Deckschicht.

Durch den das Feed beaufschlagenden Druck entsteht in Pfeilrichtung eine Kraftwirkung in Richtung auf die Membran 2, so daß die Flüssigkeit von der Innenkammer 3 in die Außenkammer 4 befördert wird. Die Membran 2 wirkt dabei als Druckstufe, in der ein Druckgradient entsteht. Im Feed enthaltene Feststoffpartikel 7 werden durch die Membran zurückgehalten und bleiben aufgrund des Druckgradienten an der Membran 2 hängen, so daß eine Deckschicht entsteht. Die Deckschicht wird, wie im Beispiel Fig. 2a unten zu sehen ist, während des Betriebs des Filters immer dicker, so daß nach einer bestimmten Zeit kein Permeat mehr hindurch gelassen wird.

Anders ist die in Fig. 2b dargestellte Situation. Dort werden die Feststoffpartikel durch radiale Schwingungskomponenten und dadurch, daß der Druck periodisch reduziert wird, von der Membran weggeschleudert, so daß die Feststoffpartikel wieder vom Feed aufgenommen werden können und mit diesem mitströmen. An der Membran 2 finden daher zwei miteinander konkurrierende, zeitlich versetze, periodische Prozesse statt, wenn der Druck periodisch erhöht und erniedrigt wird. Bei hohem Druck erfolgt Filtern und die Bildung einer Deckschicht. Bei niedrigem Druck wird die Deckschicht, unterstützt durch Schwingungen der Membran 2, wieder aufgelöst.

Es gibt daher aufgrund beider konkurrierender Prozesse ein dynamisches Gleichgewicht für die Ausbildung der Deckschicht. Das ist aus dem in Fig, 2b unten angegebenen zeitlichen Verlauf zu ersehen, wo die Stärke der Deckschicht nicht unbegrenzt zunimmt, sondern einem Grenzwert zustrebt, so daß die Deckschicht bei entsprechender Dimensionierung der Betriebsparameter immer noch dünn genug ist, einen ausreichenden Filtratfluß für das Permeat durchzulassen.

Aus den dargestellten Prinzipien für dynamische und statische Filtration sollte man annnehmen, daß eine periodische Änderung des Druckes ausreicht, um die dynamische Filtration nach Fig. 2b zu erreichen. Es hat sich jedoch gezeigt, daß bei einem starren Rohr als Hülle 1 wesentlich geringere Standzeiten der Membran von nur drei bis vier Wochen erreicht wurden, als bei Verwendung des beschriebenen PVC-Gewebeschlauches. Die Beweglichkeit und die Elastizität der Hülle 1 erbringt also eine wesentlichen Beitrag zur Auflösung der Deckschicht.

Zum besseren Verständnis des zugrundeliegenden Mechanismus wird zur Erklärung angenommen, daß der durch die Beweglichkeit der Hülle gegebene Freiheitsgrad einer Relativbewegung zwischen Hülle 1 und der Membran 2, und die aufgrund der Elastizität der Hülle 1 möglichen Schwingungszustände von Membran 2 und Hülle 1, die Auflösung der Deckschicht wesentlich unterstützen. Aus Fig. 2b ist zu entnehmen, daß dabei radiale Bewegungen bzw.. Schwingungskomponenten eine Rolle spielen müssen, die dem Druck und damit dem Aufbau der Deckschicht entgegenwirken. Wird beispielsweise angenommen, daß zu einem Zeitpunkt aufgrund eines in der Hülle angeregten Schwingungsmodes diese sich lokal nach innen bewegt, während sich die Membran nach außen bewegt, entsteht lokal an der Membran zeitlich ein kleiner Rückfluß, der die Deckschicht auflockert, so daß diese wieder leichter vom Feed abgetragen werden kann, während zu anderen Zeitpunkten, an denen eine entsprechende Gegenbewegung von Hülle 1 und Membran 2 stattfindet, keine wesentliche Erhöhung des Deckschichtaufbaus erwartet wird. Im Zeitmittel unterstützen die durch die elastische Hülle möglichen Schwingungsmoden und Bewegungen also den Auflösungsvorgang für eine sich bildende Deckschicht.

Bei dieser Erklärung ist vor allem die Relativbewegung zwischen Hülle und Membran wichtig, so daß sowohl Elastizität als auch Beweglichkeit die bestimmenden Größen bei der Verbesserung des Deckschichtabbaus sind.

Unabhängig von dieser Erklärung bleibt der beobachtete Effekt bestehen, daß ein Ersetzen eines starren Rohres durch eine elastische oder bewegliche Hülle, einen Filter drastisch verbessert.

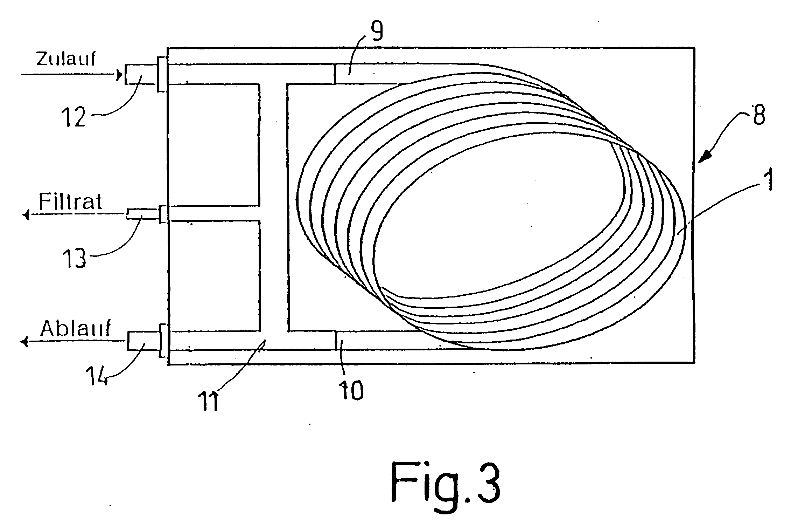

In Fig 3 ist ein im Ausführungsbeispiel verwendetes Filtrationsmodul 8 gezeigt. Die in Fig. 1 beschriebene Hülle 1 mit innenliegender Membran ist dabei mit 6 Windungen spiralig aufgewickelt und an ihren Enden 9 und 10 befestigt. Das hat den Vorteil, daß auch Schwingungsmoden in Längsrichtung partiell in radialer Richtung lokal an Teilen der Hülle 1 und der Membran 2 wirksam werden. Eine Verlängerung der Hülle 1 oder der Membran 2 aufgrund einer Druckerhöhung oder der positiven Amplitude einer longitudinalen Schwingung führt aufgrund der Windungen zur Vergrößerung des Radius jeder Windung. Periodischer Druckanstieg und Druckabfall hat also eine Radialbewegung zur Folge, so daß sich Membran 2 und Hülle 1 lokal unterschiedlich periodisch aufeinander zu und voneinander wegbewegen. Bei einer Relativbewegung der Membran 2 von der Hülle 1 weg, kann die Deckschicht auf der Membran 2 abgetragen werden und die darin enthaltenen Feststoffpartikel im Feed aufgenommen werden.

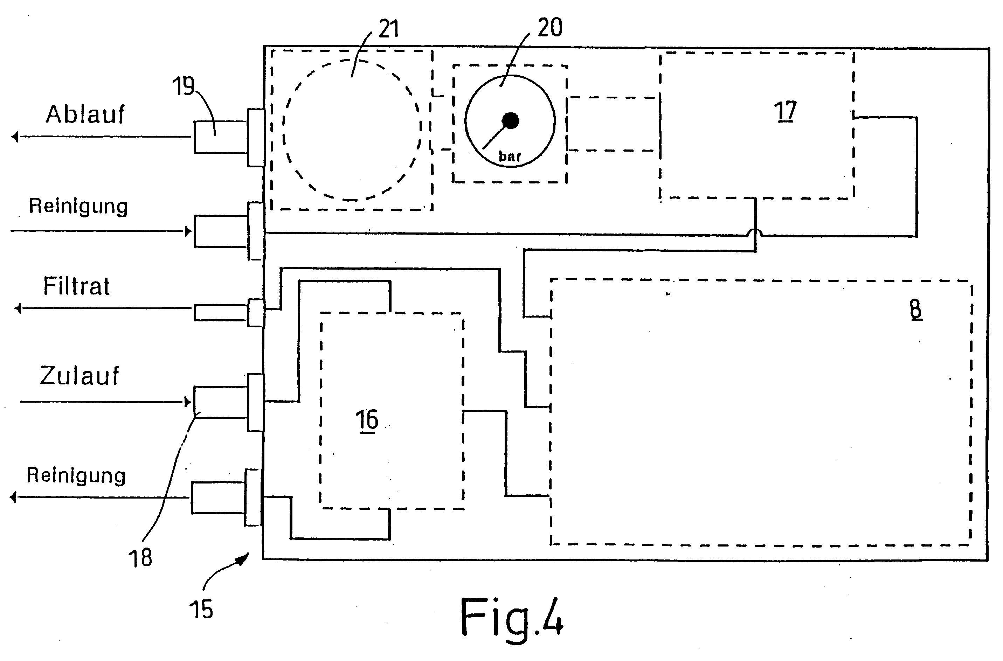

Außerdem hat das Aufwickeln der Hülle 1 mit der innenliegenden Membran den Vorteil, daß nur wenig Raum benötigt wird. Die gesamte Filtervorrichtung, wie sie in Fig. 3 und 4 beschrieben wird, konnte in einem Schaltschrank mit den Maßen 40×30× 20 cm eingebaut werden.

Die Hülle 1 mit der innenliegenden Membran 2 ist an einem Verteiler 10 angeschlossen, der das Feed über einen Zulauf 12 in die Innenkammer 3, das Permeat aus der Außerkammer 4 zu einem Ablauf 13 für das Filtrat und die Flüssigkeit nach Durchlaufen der Innenkammer zu einem Ablauf 14 leitet.

Das Filtrationsmodul 8 von Fig. 3 ist in einer Filtervorrichtung 15 integriert. Zusätzlich zu dem Filtrationsmodul 8 enthält die Filtervorrichtung 15 zwei Drei-Wege-Hähne 16 und 17 am Zulauf 12 und Ablauf 14, die neben einer Normalstellung in eine Schaltstellung zur Reinigung des Filtrationsmoduls 8 geschaltet werden können. Wie in Fig.4 durch die Pfeile angedeutet ist, wird beim Reinigen eine Reinigungsflüssigkeit in entgegengesetzter Flußrichtung der zu filternden Flüssigkeit durch das Filtrationsmodul 8 geschickt. Es wurden mehrere chemische Reinigungsverfahren getestet, wobei sich herausstellte, daß sich die größte Wirkung bei einer Rückspülung mit einer 5%igen Natronlauge einstellte. Die Spülzeit betrug dabei etwa 1 Stunde. Eine mechanische Reinigung mit Schaumstoffbällchen erzielte aber annähernd gleiche Wirkung und ist deshalb vorzuziehen, weil sie keine aggressiven Substanzen benötigt.

Im normalen Filterbetrieb wurden die Drei-Wege-Hähne 16 und 17 aber so geschaltet, daß das Feed über einen Anschluß 18 zugeführt wurde, der nach Durchlaufen der Filtervorrichtung 15 über einen Anschluß 19 entnommen wurde. Zwischen dem Ablauf 14 des Filtrationsmoduls 8 und dem Anschluß 18 ist neben dem Drei-Wege-Hahn 17 ein Druckmeßgerät 20 mit Dämpfung der Druckspitzenanzeige zur Kontrolle des Druckes und ein Überdruckventil 21 geschaltet.

Das Überdruckventil 21 ist ein Druckhalteventil, welches federbelastet als Sicherheitsventil wirkt. Mit Hilfe einer Membranpumpe für eine variable Förderung des Feeds wird dieser pulsierend mit 153 Hüben pro Minute zugeführt. Das Überdruckventil 21 kann in seiner Federbelastung verstellt werden, so daß sich der Druck einstellen läßt, bei dem es sich öffnet und die Flüssigkeit wieder aus der Innenkammer 3 ablaufen läßt.

Im Normalbetrieb zur Onlineanalyse wurde bei einem Feed von 100 Litern/h ein Filtratstrom von 0,5 Litern/h entnommen.

Bei einem Rückgang des Permeatstroms kann über eine Verstellung am Überdruckventil 21 oder über die Förderung durch die Membranpumpe die notwendige Grundmenge an Filtrat eingehalten werden. Wenn die Grundmenge nicht mehr erreichbar ist, muß die oben beschriebene Reinigung erfolgen.

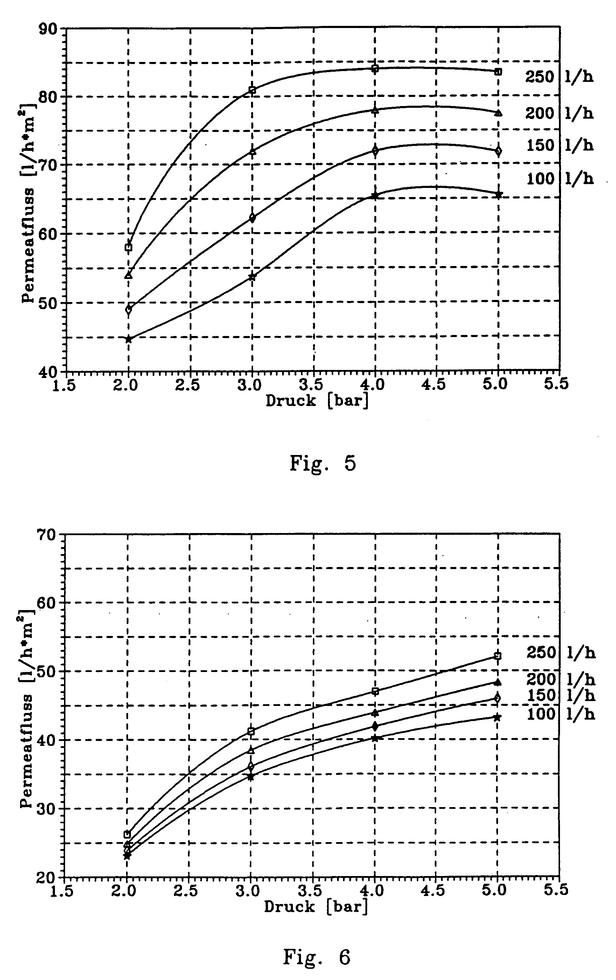

Fig. 5 und 6 zeigen am beschriebenen Ausführungsbeispiel gewonnene Meßkurven für den erreichbaren Permeatfluß in Abhängigkeit von der an der Membran aufgebauten Druckdifferenz, dem Transmembrandruck. Parameter der in jedem Diagramm gezeigten Meßkurven ist dabei die Menge des Feed in Litern/h.

Die Fig. 5 und 6 unterscheiden sich dabei dadurch, daß das Feed in Fig. 5 aus einem Belebungsbecken einer Kläranlage und in Fig.6 von einer Nachklärung entnommen wurde. Der Feststoffgehalt im Belebungsbecken betrug 4 g/l, während das Feed bei der Nachklärung bei nahezu 0 g/l lag.

In Fig. 5 ist deutlich zu erkennen, daß die Abhängigkeit des Permeatflusses vom Transmembrandruck unterhalb von 3 bar zunimmt und die Meßkurven bei Transmembrandrucken oberhalb von 4 bar flach verlaufen. Die Abhängigkeit bei hohen Transmembrandrucken ist darauf zurückzuführen, daß bei Erhöhen desselben zwar mehr Permeat durch die Membran dringen kann, dies aber durch die gleichzeitige Ausbildung einer stärkeren Deckschicht wieder verhindert wird. Man spricht bei dieser Erscheinung von einem deckschichtkontrollierten Stoffaustausch.

Unterhalb von 3 bar hindert die Ausbildung einer Deckschicht den Permeatfluß nur in einer für die Praxis unwesentlichen Weise. Die entnehmbare Permeatmenge ist groß genug für eine Onlineanalyse. Beim Betrieb an einer Kläranlage wurde typisch sogar mit Drucken unter 1 bar gearbeitet.

Im Vergleich der Meßdaten von Fig. 5 mit denen von Fig. 6 ist zu erkennen, daß auch bei wesentlich geringeren Feststoffmengen im Feed ein Permeatfluß innerhalb der gleichen Größenordnung erreicht wird, was ebenfalls verdeutlicht, daß eine ausgebildete Deckschicht den Permeatfluß nur wenig beeinträchtigt.

Der kleinere Permeatfluß bei einem Feed aus der Nachklärung im Vergleich zur Belebung ist darin zu sehen, daß die Feststoffe in beiden Fällen unterschiedliche Partikelgrößen haben. Die kleineren Partikel bei einem Feed aus der Nachklärung können daher Membran leichter verstopfen.

Die Fig. 5 und 6 zeigen daß eine Filtervorrichtung 15 zur Erzeugung von Permeat für die Onlineanalyse bei Kläranlagen geeignet ist. Es kann sogar mit niedrigen Transmembrandrucken weit unterhalb von drei bar und sogar unter 1 bar gearbeitet werden. Bei herkömmlichen Ultrafiltrationsanlagen muß dagegen ein Druck zwischen 4 und 10 bar verwendet, was energieaufwendig ist und höhere Sicherheitsmaßnahmen erfordert.

Das dargestellte Ausführungsbeispiel beschreibt somit ein kostengünstig aufgebautes, technisch einfaches Gerät für das Filtern von Feststoffen vor einer Onlineanalyse, wobei der größte Vorteil in den langen möglichen Reinigungsintervallen zu sehen ist, die einen lang anhaltenden, wartungsfreien, kontinuierlichen Betrieb ermöglichen.

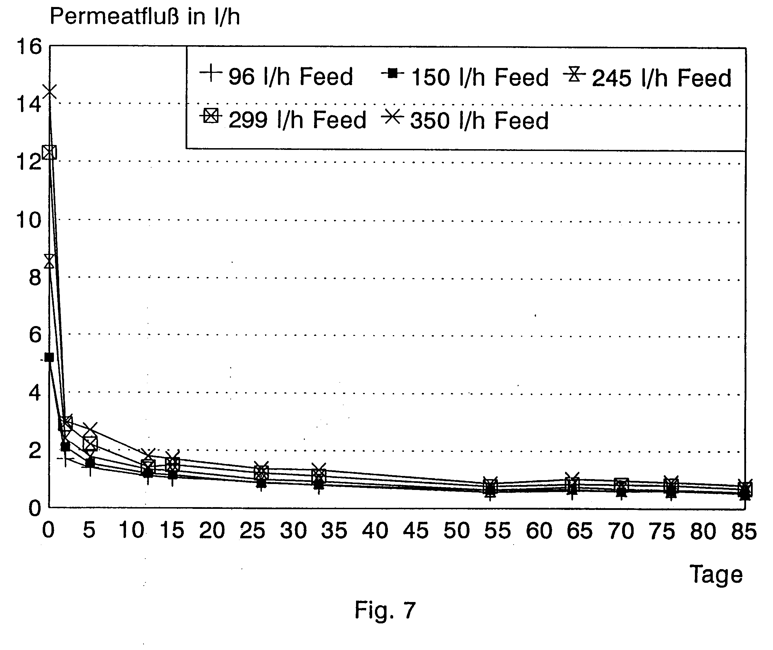

Die langen Reinigungsintervalle gehen aus Fig. 7 hervor. Die Figur zeigt eine Abhängigkeit des Permeatflusses von der Betriebsdauer beim Ausführungsbeispiel für verschiedene Zuläufe des Feeds. Die Kurven zeigen deutlich den in Fig. 2 schon diskutierten Verlauf beim dynamischen Filtern. Ferner ist erkennbar, daß selbst bei einem geringen Feed von 100 l/h nach 85 Tagen noch eine für die Analyse verwertbare Permeatmenge von 0,5 Litern/h erzielt wird.

## Patentansprüche

1. Verfahren zum Filtern von Flüssigkeiten, bei dem einer in einer Hülle (1) befindlichen schlauchförmigen Membran (2) eine Flüssigkeit zugeführt und ein daraus ausgefiltertes Permeat zwischen Hülle (1) und Außenwand (5) der schlauchförmigen Membran (2) entnommen wird, dadurch gekennzeichnet, daß die Hülle (1) elastisch und/oder beweglich ausgeführt wird und über Membran (2) und Hülle (1), zumindest in Teilbereichen, eine Relativbewegung zwischen Hülle (1) und der darin befindlichen Membran (2), insbesondere durch Schwingungsanregung, erzeugt wird.

2. Verfahren nach Anspruch 1, dadurch gekennzeichnet, daß die Relativbewegung zwischen Hülle (1) und Membran (2) über periodische Druckänderungen der zugeführten Flüssigkeit erzeugt wird.

3. Verfahren nach Anspruch 2, dadurch gekennzeichnet, daß die Flüssigkeit pulsierend gefördert und an einem am strömungsmäßigen Ende (10) der schlauchförmigen Membran (2) befindlichen Überdruckventil (21) ein Druckanstieg erzielt wird, wodurch sich die Wand der schlauchförmigen Membran (2) über die gesamte Länge dehnt, und danach das Überdruckventil (21) geöffnet wird, um einen Druckabfall zu erzeugen, der eine Druckwelle durch die Membran (2) hervorruft, welche Schwingungen in der Membran verursacht, die einer Anlagerung von Feststoffen auf der Membran entgegenwirken.

4. Vorrichtung zur Durchführung eines der Verfahren nach Anspruch 1 bis 3 mit einer in einer Hülle (1) befindlichen schlauchförmigen Membran (2), die über einen Zulauf (12) mit Flüssigkeit speisbar ist, mit einem Permeatablauf (13), über den ein durch die Membran (2) gefilterter Teil der Flüssigkeit als Permeat entnehmbar ist und mit einem weiteren Ablauf (14) für den ungefilterten Teil der Flüssigkeit, dadurch gekennzeichnet,
daß die Hülle (1) elastisch und/oder beweglich ausgebildet ist und eine an der Hülle wirkenden Einrichtung zur Erzeugung und zum Übertragen von zumindest lokal begrenzten Relativbewegungen zwischen Hülle (1) und Membran (2) vorgesehen ist.

5. Vorrichtung nach Anspruch 4, dadurch gekennzeichnet, daß die Einrichtung einen pulsierenden Druck in der zugeführten Flüssigkeit erzeugt, der die Hülle (1) und die Membran (2) in Schwingungen versetzt.

6. Vorrichtung nach Anspruch 5, dadurch gekennzeichnet, daß am Ablauf (14) für den ungefilterten Teil der Flüssigkeit ein Überdruckventil (21) mit einem Schaltdruck vorgesehen ist, bei dem das Überdruckventil (21) sich öffnet, und an dem bei Zuführung der zu filternden Flüssigkeit in die schlauchförmige Membran (2) ein Druckanstieg erzeugbar ist, der bis zum Schaltdruck anwächst, nach dessen Erreichen das Überdruckventil (21) durch Ablassen der zu filternden Flüssigkeit aus der Membran den Druck in der schlauchförmigen Membran vermindert.

7. Vorrichtung nach Anspruch 5 oder 6, dadurch gekennzeichnet, daß die Einrichtung zur Erzeugung des pulsierenden Drucks eine Membranpumpe enthält.

8. Vorrichtung nach einem der Ansprüche 5 bis 7, dadurch gekennzeichnet, daß mit der Einrichtung periodische Druckschwankungen mit einer Frequenz von mehr als 100 pro Minute erzeugbar sind.

9. Vorrichtung nach einem der Ansprüche 4 bis 8, dadurch gekennzeichnet, daß die Hülle (1) ein PVC-Gewebeschlauch ist.

10. Vorrichtung nach Anspruch 9, dadurch gekennzeichnet, daß die schlauchförmige Membran (2) einen Außendurchmesser von 8,6 mm hat und die Hülle (1) ein PVC-Gewebeschlauch mit einem Innendurchmesser von 10 mm ist, der einem Überdruck von 10 bar standhält.

11. Vorrichtung nach Anspruch 4 bis 10, dadurch gekennzeichnet, daß die Hülle (1) mit der in dieser aufgenommenen schlauchförmigen Membran (2) biegsam ist und in mehreren Windungen spiralförmig aufgewickelt ist.

## Claims

1. Process for filtering liquids, in which a liquid is supplied to a hose-like membrane (2) located in a sheath (1) and permeate filtered therefrom is extracted between sheath (1) and outer wall (5) of the hose-like membrane (2), characterised in that the sheath (1) is elastic and/or flexible in design and a relative movement between sheath (1) and the membrane (2) located therein is generated over membrane (2) and sheath (1), at least in sections, in particular by excitation of vibrations.

2. Process according to claim 1, characterised in that the relative movement between sheath (1) and membrane (2) is generated by periodic pressure changes in the liquid supplied.

3. Process according to claim 2, characterised in that the liquid is conveyed in a pulsating manner and a rise in pressure is achieved at a pressure relief valve (21) located at the flow end (10) of the hose-like membrane (2) so the wall of the hose-like membrane (2) expands over the entire length and the pressure relief valve (21) is then opened in order to generate a fall in pressure which produces a pressure wave through the membrane (2), causing vibrations in the membrane which prevent an accumulation of solids on the membrane.

4. Apparatus for carrying out one of the processes according to claims 1 to 3 with a hose-like membrane (2) which is located in a sheath (1) the apparatus being feedable with liquid via an intake (12), with a permeate outlet (13) by means of which a portion of the liquid filtered by the membrane (2) can be extracted as permeate and with a further outlet (14) for the unfiltered portion of the liquid, characterised in that the sheath (1) is elastic and/or flexible in design and an arrangement acting on the sheath to generate and transmit at least locally limited relative movements between sheath (1) and membrane (2) is provided.

5. Apparatus according to claim 4, characterised in that the arrangement generates in the liquid supplied a pulsating pressure which sets the sheath (1) and the membrane (2) into vibration.

6. Apparatus according to claim 5, characterised in that, at the outlet (14) for the unfiltered portion of liquid there is provided a pressure relief valve (21) with a switching pressure at which the pressure relief valve (21) opens and at which a rise in pressure can be generated when supplying the liquid to be filtered into the hose-like membrane (2), which increases to the switching pressure, after attainment of which the pressure relief valve (21) reduces the pressure in the hose-like membrane by discharging the liquid to be filtered from the membrane.

7. Apparatus according to claim 5 or 6, characterised in that the arrangement for generating the pulsating pressure contains a diaphragm pump.

8. Apparatus according to one of claims 5 to 7, characterised in that periodic pressure variations with a frequency higher than 100 per minute can be generated by the arrangement.

9. Apparatus according to one of claims 4 to 8, characterised in that the sheath (1) is a PVC woven hose.

10. Apparatus according to claim 9, characterised in that the hose-like membrane (2) has an external diameter of 8.6 mm and the sheath (1) is a PVC woven hose with an internal diameter of 10 mm capable of withstanding an excess pressure of 10 bar.

11. Apparatus according to claims 4 to 10, characterised in that the sheath (1) with the hose-like membrane (2) received therein is pliable and is wound spirally in several turns.

## Revendications

1. Procédé de filtrage de liquides dans lequel un liquide est envoyé à une membrane (2) en forme de tuyau, se trouvant dans une gaine (1), et un perméat, séparé par filtrage de celui-ci, est prélevé entre la gaine (1) et la paroi extérieure (5) de la membrane (2) en forme de tuyau, caractérisé en ce que la gaine (1) est élastique et/ou mobile et qu'il est produit sur la membrane (2) et la gaine (1), au moins dans des zones partielles, un déplacement relatif entre la gaine (1) et la membrane (2) se trouvant à l'intérieur, en particulier par production d'oscillations.

2. Procédé selon la revendication 1, caractérisé en ce que le déplacement relatif entre la gaine (1) et la membrane (2) est produit par des variations périodiques de la pression du liquide alimenté.

3. Procédé selon la revendication 2, caractérisé en ce que le liquide est acheminé pulsé et qu'il est produit une augmentation de pression, sur une soupape de surpression (21) se trouvant à l'extrémité (10) par rapport à l'écoulement de la membrane (2) en forme de tuyau, ce qui fait que la paroi de la membrane (2) en forme de tuyau se dilate sur toute la longueur, et ensuite la soupape de surpression (21) est ouverte, afin de produire une chute de pression, qui provoque une onde de pression à travers la membrane (2), laquelle cause des oscillations dans la membrane, qui s'opposent à un dépôt de matières solides sur la membrane.

4. Dispositif pour la mise en oeuvre de l'un des procédés selon les revendications 1 à 3 avec une membrane (2) en forme de tuyau, se trouvant dans une gaine (1), qui peut être alimentée en liquide par une arrivée (12), avec une évacuation de perméat (13) par laquelle une partie du liquide, filtré par la membrane (2), peut être prélevée sous la forme de perméat et avec une autre évacuation (14) pour la partie non filtrée du liquide, caractérisé en ce que la gaine (1) est élastique et/ou mobile et qu'il est prévu un dispositif, agissant sur la gaine, pour produire et pour transmettre des déplacements relatifs au moins limités localement entre la gaine (1) et la membrane (2).

5. Dispositif selon la revendication 4, caractérisé en ce que le dispositif produit une pression pulsée dans le liquide amené, qui met la gaine (1) et la membrane (2) en oscillations.

6. Dispositif selon la revendication 5, caractérisé en ce qu'il est prévu sur l' évacuation (14) pour la partie non filtrée du liquide, une soupape de surpression (21) avec une pression de commande, pour laquelle la soupape de surpression (21) s'ouvre, et sur laquelle il peut être produit, lors de l'envoi du liquide à filtrer dans la membrane (2) en forme de tuyau, une augmentation de pression qui s'accroît jusqu'à la pression de commande, la soupape de surpression (21) réduisant la pression dans la membrane en forme de tuyau, par évacuation du liquide à filtrer, après qu'a été atteinte la pression de commande.

7. Dispositif selon les revendications 5 ou 6, caractérisé en ce que le dispositif de production de la pression pulsée contient une pompe à membrane.

8. Dispositif selon l'une des revendications 5 à 7, caractérisé en ce qu'avec le dispositif peuvent être produites des fluctuations de pression périodiques d'une fréquence supérieure à 100 par minute.

9. Dispositif selon l'une des revendications 4 à 8, caractérisé en ce que la gaine (1) est un tuyau en tissu de PVC.

10. Dispositif selon la revendication 9, caractérisé en ce que la membrane (2) en forme de tuyau présente un diamètre extérieur de 8,6 mm et la gaine (6) est un tuyau en tissu de PVC d'un diamètre intérieur de 10 mm, qui résiste à une surpression de 10 bar.

11. Dispositif selon les revendications 4 à 10, caractérisé en ce que la gaine (1) avec la membrane (2) en forme de tuyau, logée dans celle-ci, est flexible et est enroulée en forme de spirale, en plusieurs spires.
